# EUROPEAN PATENT SPECIFICATION

(11) **EP 1 902 770 B1**
(45) Date of publication and mention of the grant of the patent: **30.01.2013**
(21) Application number: 05850033.1
(22) Date of filing: 22.12.2005
(51) Int. Cl.: B01D 59/48, C02F 1/48, H01J 49/00

(54) **FILTER FOR CAPTURING POLLUTING EMISSIONS**
FILTER ZUM AUFFANGEN VON UMWELTSCHÄDLICHEN EMISSIONEN
FILTRE DE CAPTURE D'EMISSIONS POLLUANTES

(30) Priority: 12.07.2005 ES 200501693
(43) Date of publication of application: 26.03.2008
(73) Proprietor: Centro de Investigacion de Rotación y Torque Aplicada, S.L., 28049 Madrid (ES)
(72) Inventor: DORADO GONZÁLEZ, Manuel, 28043 Madrid (ES); ANDREU SERRA, Jaime, E-28223 Pozuelo de Alarcon, Madrid (ES); MONTERO CATALINA, Carlos, E-28922 Alcorcon, Madrid (ES)
(74) Representative: Carvajal y Urquijo, Isabel
(86) International application number: PCT/ES2005/000701
(87) International publication number: WO 2007/006817

(56) References cited:
- ES-A1- 2 164 030
- IT-B- 1 035 556
- NL-A- 7 200 022
- GONZALEZ URENA A ET AL: "Molecular beam depletion by homogeneous and oscillating electric fields", CHEMICAL PHYSICS LETTERS ELSEVIER NETHERLANDS, vol. 341, no. 5-6, 29 June 2001 (2001-06-29), pages 495-500, XP8129285, ISSN: 0009-2614

## Description

### Object of the Invention

The present invention relates to a new system for filtering pollutants in a fluid, especially designed for its use in fume purification and/or water treatment installations.

The present invention is comprised within the field of fluid purification and the substance separation methods.

### Background of the Art

There are many methods and systems on the market for separating contaminants in a fluid but none like the one described in this specification.

These methods can be physical, such as fractional distillation, filtration, decantation, centrifugation, chromatography, electrolysis, etc, or chemical. Most chemical methods are based on the addition of new substances to the initial mixture; chemical bonds are thus created which modify the physical properties of said substances, and they can subsequently be separated by applying physical methods. All these methods are widely documented and are routinely used in the industry.

There are inventions for the particular case in which the metal particles present in a fluid are to be separated. In this case, a magnet is submersed in the fluid and these particles are collected (WO 2005/014486, WO 03/078069, WO 2002/094351, WO 02/094446, WO 02/094351, WO 02/081092, WO 02/20125, WO 01/78863, WO 98/16320, WO 97/04873, US 6,846,411, US 6,835,308, US 6,833,069, US 6,706,178, US 6,649,054, US 6,638,425, US 6,461,504, US 6,277,276, US 6,210,572, US 5,817,233, US 4,488,962, US 5,647,993, US 5,468,381, US 5,439,586, US 5,242,587, US 5,012,365, US 5,009,779, US 4,894,153, US 4,722,788, US 4,594,215, US 4,468,321, US 4,446,019, US 4,394,264, US 4,377,830, US 4,363,729, US 4,251,372, US T997,002, US 4,209,403, US 4,206,000, US 4,154,682, US 4,082,656, US 4,054,931, US 4,031,011, US 4,026,805, US 3,979,288, ESP 2,085,824, ESP 2,015825, ESP 8,700,069, ESP 8,206,202, ESP 0,467,616, ESP 0,332,684, ESP 0,246,811, ESP 0,123,480).

Systems similar to the previous one applied to the treatment of lubricants are also described (WO 97/26977, WO 97/09275, US 6,729,442, US 6,554,999, US 6,524,476, US 6,503,393, US 6,413,421, US 6,337,012, US 6,207,050, US 6,162,357, US 6,139,737, US 5,932,108, US 5,702,598, US 5,423,983, US 5,078,871, US 4,826,592, 4,763,092, US 5,389,252, US 5,354,462, US 4,705,626, US 4,613,435, US 4,450,075, US 4,293,410, US 4,176,065, US 6,551,506, US 6,444,123, US 5,571,411, ESP 0,274,276, ESP 0,314,351.)

Some methods apply these magnetic separation systems when metal particles in a gaseous fluid are to be separated (US 6,897,718, US 6,750,723, US 6,594,157). In other cases, a metal substance is reacted with other substances to provide them with magnetic properties and thus enable them to be separated by means of using these magnetic filters (US 5,122,269).

Magnetic filters can also be used to separate ionized particles, electrons or any other type of particle with an electric charge (US 6,559,445, US 6,441,378, US 6,094,012, US 6,016,036).

Another type of filter uses the interaction of non-uniform electric and magnetic fields, where there is a strong field gradient, with the magnetic and/or electric dipole moments of neutral particles. These particles are deflected by this process from their original path (US 6,251,282).

A. Gonzalez Urena et al. "Molecular beam depletion by homogeneous and oscillating electric fields"; Chem.Phys.Lett,;341 (2001) 495-500 discloses a filter system for a molecular beam, which can be used to separate the different substances that can form said molecular beam, wherein a uniform electric field is applied in order to cause a Stark effect, and wherein an electric field oscillating in resonance with the energy separation caused by the Stark effect is simultaneously applied.

No filtration system or method for filtering pollutants in a fluid based on the application of external (electric and/or magnetic) force fields in resonance with energy transitions of the substances to be captured has been described to date.

### Description of the Invention

The present invention relates to a system which allows filtering pollutants present in a fluid by means of the application of several electric and/or magnetic fields perpendicular to one another and in resonance with energy transition of the molecules to be filtered.

The system described below can be applied by means of using electric or magnetic fields without distinction. To simplify the drafting of the text, electric fields will be referred to hereinafter although it must be understood that everything relating to these fields can also be applied to the use of magnetic fields.

The invention can also apply a method wherein:
3a) the first external force field is caused by a non-uniform electric field having an axial gradient along the hollow cylindrical support (S);
3b) the second external force field is caused by an oscillating electric field, such that by fixing different resonant frequencies, different substances are resonated and captured.

The generation of a uniform electric field is first required, by means of applying a potential difference between 2 metal elements (copper sheets, or any similar element which allows generating the uniform electric field). The uniform field will hereinafter be referred to as U.F. for the sake of simplification. The fluid from which the substances to be filtered are to be extracted must traverse said U.F. and once inside it, a new field perpendicular to the previous one and oscillating (which will be referred to as O.F.) must be applied such that the oscillation frequency of O.F. is in resonance with the separation of energy levels caused by U.F. in the molecules to be filtered.

It is known that any molecule in the presence of an external field causes an effect called Stark effect (when it is in the presence of an electric field) or Zeeman effect (when it is in the presence of a magnetic field). This Zeeman or Stark effect causes the splitting of the (electronic, vibrational or rotational) energy levels of the molecules. Transitions between different energy levels can be established, i.e. the molecule changes from one energy state to another when an energy radiation equivalent to the separation of the levels between which the change occurs is applied. This process is known as resonance.

Considering that the molecules with which resonance is to occur cover a path through the filter, when the resonance phenomenon occurs in the aforementioned conditions, a deflection from the original path is caused and the molecule follows a new path which can be controlled by modifying the U.F. and O.F. intensity.

The optimal conditions for causing the molecules to be eliminated from the fluid to be retained in the application area of the effect can be calculated. Once enough molecules for reaching a high concentration have been captured, their extraction is enabled by means of suction system.

The application of the system can be repeated as many times as desired for the purpose of improving the yield of the filtration process.

If different compounds in one and the same fluid are to be captured, several pieces of filtration equipment arranged in series can be used, each of them in resonance with the molecule to be captured.

### Preferred Embodiment

The present invention is illustrated by means of the following example which by no means limits its scope, which is exclusively defined by the claims.
Filtration of a fluid by the application of fields in resonance with the molecules to be captured

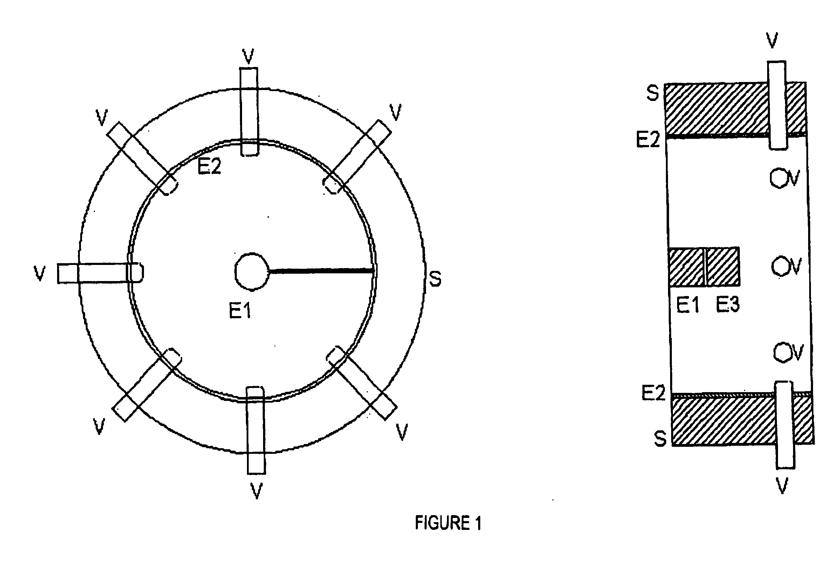

An experimental assembly such as the one described in Figure 1 is considered. This assembly is not carried out to scale. The system is formed by a support (S) with the shape of a hollow cylinder, supporting a metal surface with a cylindrical shape (E2). From the support (S), a rod (made of material insulating from electric current) penetrates towards the inside of the cylinder, which rod supports two other metal cylinders called (E1) and (E3), electrically insulated from one another.

E1 and E3 are at the same potential. A potential difference generating a uniform field U.F. is applied between E2 and the area comprised by E1 and E3, the lines of force of which field start from E1 and E3, reaching E2. At the same time, a potential difference is applied between E1 and E3, such that these two elements behave as an antenna, radiating an oscillating field O.F. which is perpendicular to U.F.

When maintaining the oscillation frequency of the O.F. in resonance with the transitions generated by the U.F. in the molecules to be filtered, said molecules can be trapped in the area close to the separation between E1 and E3. Maintaining the system activated, the concentration of these molecules, involved in the resonation, increases in the area comprised between E1 and E3. Suction valves located around (S) and which have been called (V) are periodically opened. The outlet of said valves is channeled to a tank in which the captured substances are stored.

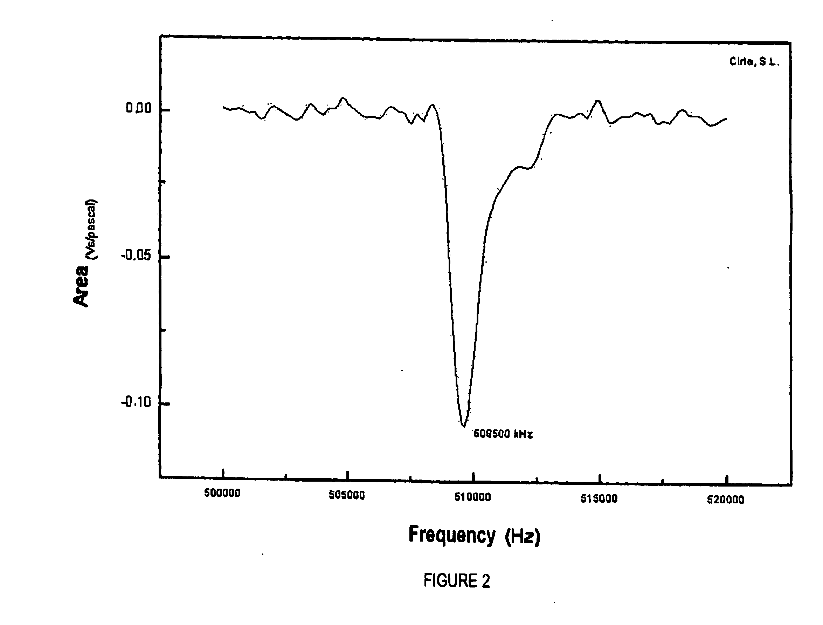

A practical example is shown in Figure 2, in which the filter is applied to the separation of molecular hydrogen from a mixture of hydrogen and helium. It can be observed how the rotational state of the molecule involved in the resonation is accurately separated.

### Brief Description of the Drawings

Figure 1 shows a schematic view of the experimental system for the case in which an electric force field is used, box (A) shows the elevational or side view and box (P) shows the plan or upper view. The following abbreviations are used:
   S: Hollow cylindrical support.
   E2: Hollow cylinder made of material conducting electric current.
   E1 and E3: Cylinders made of material conducting electric current separated from one another by a small strip of material that does not conduct electric current.
   V: Valves which can be pulsed connected to an external vacuum system (it is not included in the figure), such that when they are opened, they suction the substances captured inside (S).
Figure 2 shows a spectrum in which molecular hydrogen is separated from a mixture of hydrogen and helium. The vertical axis shows the signal intensity, which is proportional to the concentration of molecular hydrogen, traversing the filter. The horizontal axis shows the frequency of the oscillating field. For a uniform field of 0,01 T (100 Gaus), it is observed how the hydrogen coming out of the filter decreases in 100% of the state involved in the resonation.

## Claims

1. A method for filtering molecules of a substance contained in a fluid comprising:
1a) applying to the fluid a first external force field to cause a separation of energy levels in the molecules to be filtered;
1b) simultaneously applying to the fluid a second external force field in resonance with the separation of energy levels in the molecules to be filtered;
1c) so that the molecules to be filtered are deflected from an original path and follow a new path which is controlled by modifying the first external force field and the second external force field;
**characterized in that** the method is applied in a filter system comprising:
1d)a hollow cylindrical support (S);
1e)a hollow cylinder (E2) made of a material conducting electric current on an inner wall of the hollow cylindrical support (S);
1f) a rod:
1f1) made of a material insulating from electric current;
1f2) radially penetrating from the inner wall towards the inside of the cylinder;
1f3) a support for two metal cylinders (E1, E3), electrically insulated from one another and coaxial with the hollow cylindrical support (S) and the hollow cylinder (E2);
with a potential difference generating said first external force field being applied between said hollow cylinder (E2) and said two metal cylinders (E1, E3),
and an oscillating potential difference generating said second external force field is applied between said two metal cylinders (E1, E3);
1f4) so that the molecules to be filtered are trapped in an area close to the separation between said two metal cylinders (E1, E3).

2. The method of claim 1 wherein:
2a) the first external force field is caused by a uniform electric field;
2b) the second external force field is caused by an oscillating electric field.

3. The method of claim 1 wherein:
3a) the first external force field is caused by a non-uniform electric field having an axial gradient along the hollow cylindrical support (S);
3b) the second external force field is caused by an oscillating electric field, such that by fixing different resonant frequencies, different substances are resonated and captured.

4. The method of claim 1 wherein:
4a) the first external force field is caused by a uniform magnetic field;
4b) the second external force field is caused by an oscillating magnetic field.

5. The method of any of claims 1-4 wherein said first and second external force fields are perpendicular to one another.

6. The method of any of claims 1-5 wherein at least one repetition of the method is applied n-times to one and the same substance or to several substances, simultaneously or sequentially.

7. A method according to any of claims 1-6, further comprising removing the substances captured in the filter by suction means.

8. The method of claim 7 further comprising adding to the suction means a plurality of pulsed valves.

9. A filter system for filtering molecules in a substance arranged to use the method of any of claims 1-8.

## Patentansprüche

1. Verfahren zum Filtern von Molekülen einer in einem Fluid enthaltenen Substanz, umfassend:
1a) Aufbringen eines ersten äußeren Kraftfeldes auf das Fluid, um eine Trennung von Energieniveaus in den zu filternden Molekülen hervorzurufen;
1b) gleichzeitiges Aufbringen eines zweiten äußeren Kraftfelds auf das Fluid, in Resonanz mit der Trennung von Energieniveaus in den zu filternden Molekülen;
1c) so dass die zu filternden Moleküle von einem ursprünglichen Weg abgelenkt werden und einem neuen Weg folgen, welcher durch Änderung des ersten äußeren Kraftfelds und des zweiten äußeren Kraftfelds gesteuert wird;
**dadurch gekennzeichnet, dass** das Verfahren in einem Filtersystem angewandt wird, welches Folgendes umfasst:
1d) einen hohlen Zylinderhalter (S);
1e) einen Hohlzylinder (E2), der aus einem Material hergestellt ist, das elektrischen Strom auf einer Innenwand des hohlen Zylinderhalters (S) leitet;
1f) eine Stange:
1f1) die aus einem gegenüber elektrischem Strom isolierenden Material hergestellt ist;
1f2) die von der Innenwand radial in das Innere des Zylinders ragt;
1f3) eine Halterung für zwei Metallzylinder (E1, E3), welche elektrisch gegenseitig isoliert und koaxial zum hohlen Zylinderhalter (S) und dem Hohlzylinder (E2) sind;
wobei eine Potenzialdifferenz, welche das genannte erste äußere Kraftfeld erzeugt, zwischen dem genannten Hohlzylinder (E2) und den beiden genannten Metallzylindern (E1, E3) aufgebracht wird,
und wobei eine schwankende Potentialdifferenz, welche das genannte zweite äußere Kraftfeld erzeugt, zwischen den beiden genannten Metallzylindern (E1, E3) aufgebracht wird;
1f4) so dass die zu filternden Moleküle in einem Bereich nahe der Trennung zwischen den beiden genannten Metalfzylindern (E1, E3) gefangen werden.

2. Verfahren nach Anspruch 1, wobei:
2a) das erste äußere Kraftfeld durch ein gleichmäßiges elektrisches Feld hervorgerufen wird;
2b) das zweite äußere Kraftfeld durch ein schwankendes elektrisches Feld hervorgerufen wird.

3. Verfahren nach Anspruch 1, wobei:
3a) das erste äußere Kraftfeld durch ein ungleichmäßiges elektrisches Feld hervorgerufen wird, welches einen axialen Gradienten entlang des hohlen Zylinderträgers (S) hat;
3b) das zweite äußere Kraftfeld durch ein schwankendes elektrisches Feld hervorgerufen wird, so dass durch Fixieren unterschiedlicher Resonanzfrequenzen unterschiedliche Substanzen zum Schwingen kommen und erfasst werden.

4. Verfahren nach Anspruch 1, wobei:
4a) das erste äußere Kraftfeld durch ein gleichmäßiges Magnetfeld hervorgerufen wird;
4b) das zweite äußere Kraftfeld durch ein schwankendes Magnetfeld hervorgerufen wird.

5. Verfahren nach einem der Ansprüche 1 bis 4, wobei das genannte erste und das genannte zweite äußere Kraftfeld zueinander senkrecht sind.

6. Verfahren nach einem der Ansprüche 1 bis 5, wobei zumindest eine Wiederholung des Verfahrens n-mal auf ein und dieselbe Substanz oder auf mehrere Substanzen gleichzeitig oder der Reihe nach angewandt wird.

7. Verfahren nach einem der Ansprüche 1 bis 6, umfassend weiterhin das Entfernen der im Filter erfassten Substanzen durch Saugmittel.

8. Verfahren nach Anspruch 7, umfassend weiterhin ein Hinzufügen einer Vielzahl an gepulsten Ventilen zu den Saugmittel.

9. Filtersystem zum Filtern von Molekülen in einer Substanz, welches eingerichtet ist, um das Verfahren nach einem der Ansprüche 1 bis 8 zu verwenden.

## Revendications

1. Procédé de filtrage de molécules d'une substance contenue dans un fluide comprenant :
1a) appliquer au fluide un premier champ de force externe pour produire une séparation de niveaux d'énergie dans les molécules à filtrer ;
1b) appliquer simultanément au fluide un deuxième champ de force externe en résonance avec la séparation de niveaux d'énergie dans les molécules à filtrer ;
1c) de manière que les molécules à filtrer sont déviées d'une trajectoire originale et suivent une nouvelle trajectoire qui est contrôlée en modifiant le premier champ de force externe et le deuxième champ de force externe ;
**caractérisé en ce que** le procédé est appliqué dans un système de filtrage comprenant :
1d) un support cylindrique creux (S) ;
1e) un cylindre creux (E2) réalisé en une matière conductrice de courant électrique sur une paroi intérieure du support cylindrique creux (S) ;
1f) une tringle
1f1) réalisée en une matière isolante du courant électrique ;
1f2) pénétrant radialement depuis la paroi intérieure vers l'intérieur du cylindre ;
1f3) un support pour deux cylindres métalliques (E1, E3), isolés électriquement l'un de l'autre et coaxiaux par rapport au support cylindrique creux (S) et le cylindre creux (E2) ;
une différence de potentiel qui génère ledit premier champ de force externe état appliquée entre ledit cylindre creux (E2) et lesdits deux cylindres métalliques (E1, E3),
et une différence de potentiel oscillante générant ledit deuxième champ de force externe est appliqué entre les deux cylindres métalliques (E1, E3) ; 1f4) de manière que les molécules à filtrer sont attrapées dans une zone proche de la séparation entre lesdits deux cylindres métalliques (E1, E3).

2. Procédé selon la revendication 1, dans lequel :
2a) le premier champ de force externe est produit par un champ électrique uniforme ;
2b) le deuxième champ de force externe est produit par un champ électrique oscillant,

3. Procédé selon la revendication 1, dans lequel ;
3a) le premier champ de force externe est produit par un champ électrique non-uniforme ayant un gradient axial le long du support cylindrique creux (S) ;
3b) le deuxième champ de force externe est produit par un champ électrique oscillant, de manière qu'en fixant différentes fréquences résonantes, différentes substances sont résonnées et capturées.

4. Procédé selon la revendication 1, dans lequel :
4a) le premier champ de force externe est produit par un champ magnétique uniforme ;
4b) le deuxième champ de force externe est produit par un champ magnétique oscillant.

5. Procédé selon l'une quelconque des revendications 1-4, dans lequel lesdits premier et deuxième champs de force externes sont perpendiculaires entre eux.

6. Procédé selon l'une quelconque des revendications 1-5, dans lequel au moins une répétition du procédé est appliquée n fois à une et la même substance ou à plusieurs substances simultanément ou de manière séquentielle.

7. Procédé selon l'une quelconque des revendications 1-6, comprenant en outre retirer les substances capturées dans le filtre par des moyens de succion.

8. Procédé selon la revendication 7, comprenant en outre ajouter aux moyens de succion une pluralité de soupapes pulsées.

9. Système de filtrage pour filtrer des molécules dans une substance aménagé pour utiliser le procédé de l'une quelconque des revendications 1-8.
